# EUROPEAN PATENT APPLICATION

(11) **EP 3 467 750 A1**
(43) Date of publication of application: **10.04.2019**
(21) Application number: 16907782.3
(22) Date of filing: 05.07.2016
(51) Int. Cl.: G06Q 30/00

(54) **VEHICLE MANAGEMENT METHOD AND DEVICE**

(71) Applicant: Huawei Technologies Co., Ltd., Longgang Shenzhen, Guangdong 518129 (CN)
(72) Inventor: LIN, Yangbo, Shenzhen Guangdong 518129 (CN)
(74) Representative: Körber, Martin Hans
(86) International application number: PCT/CN2016/088721
(87) International publication number: WO 2018/006277

(57) **Abstract**

The present invention discloses a vehicle management method and apparatus. The method includes: obtaining mode identifier information of a vehicle, where the mode identifier information indicates whether the vehicle is in a sharing mode or an exclusive mode, the sharing mode indicates that different users are allowed to share the vehicle, and the exclusive mode indicates that only a single user is allowed to use the vehicle; and scheduling the vehicle according to the mode identifier information. A vehicle resource can be dynamically adjusted by using the vehicle management method and apparatus in embodiments of the present invention.

## Description

### TECHNICAL FIELD

The present invention relates to the intelligent transportation field, and more specifically, to a vehicle management method and apparatus.

### BACKGROUND

An intelligent transportation system (Intelligent Transportation System, "ITS" for short) integrates and applies advanced technologies such as an information technology, a communications technology, a sensing technology, a control technology, and a computer technology, so as to establish a real-time, accurate, efficient, and comprehensive transportation management system that plays an all-round role in a wide range. Automated driving (Automated Driving) plays an essential role in the ITS. By means of automated driving, a disadvantage of a human driver in determining, reaction, and operation can be effectively avoided, so as to improve transportation safety. Automated driving can make better use of information and resources provided by a transportation system, so as to improve transportation efficiency.

Currently, in the ITS, an automated driving technology frees people from a vehicle driver role, so that a vehicle provides a more convenient service for people. However, in the automated driving technology, vehicles cannot be distinguished from each other to use different scheduling rules. Consequently, a vehicle resource in the ITS cannot be flexibly used in the automated driving technology.

### SUMMARY

Embodiments of the present invention provide a vehicle management method and apparatus, so as to dynamically adjust a vehicle resource.

According to a first aspect, a vehicle management method is provided, including:
obtaining mode identifier information of a vehicle, where the mode identifier information indicates whether the vehicle is in a sharing mode or an exclusive mode, the sharing mode indicates that different users are allowed to share the vehicle, and the exclusive mode indicates that only a single user is allowed to use the vehicle; and
scheduling the vehicle according to the mode identifier information.

According to the vehicle management method in an embodiment of the present invention, a management center obtains the mode identifier information of the vehicle and schedules the vehicle according to the mode identifier information of the vehicle, so as to dynamically adjust the vehicle resource.

In this embodiment of the present invention, the mode identifier information of the vehicle may be determined by the management center or be set by a user for the vehicle.

In this embodiment of the present invention, the different users in the sharing mode may be at least two different users, and the single user may be one single user.

In some possible implementations, the obtaining mode identifier information of a vehicle includes:
receiving the mode identifier information from the vehicle.

In this embodiment of the present invention, the mode identifier information of the vehicle that is received by a management device may be provided or sent by the vehicle.

Optionally, before the receiving the mode identifier information from the vehicle, the method further includes:
sending a query message to the vehicle, where the query message is used to obtain the mode identifier information.

In this embodiment of the present invention, the management device may actively query the mode identifier information from the vehicle.

In some possible implementations, the obtaining mode identifier information of a vehicle includes:
generating the mode identifier information according to vehicle usage information of an intelligent transportation system ITS.

Herein, the management device may receive the mode identifier information sent by the vehicle, and may also independently generate or set the mode identifier information with reference to the vehicle usage information.

In some possible implementations, after the obtaining mode identifier information of a vehicle, the method further includes:
sending the mode identifier information to the vehicle, so that the vehicle uses the sharing mode or the exclusive mode.

After obtaining the mode identifier information of the vehicle, the management device may send the mode identifier information to the vehicle, so that the vehicle uses the sharing mode or the exclusive mode according to the mode identifier information.

Optionally, the method further includes:
setting the mode identifier information for the vehicle.

Therefore, the management device may directly set the mode identifier information for the vehicle, or the management center sends specified mode identifier information to the vehicle, so that the vehicle changes a status of the vehicle according to the mode identifier information.

With reference to the first aspect, in a first possible implementation, the scheduling the vehicle according to the mode identifier information includes:
when the mode identifier information indicates that the vehicle is in the sharing mode, obtaining a driving route plan of a usage to-be-allowed user, where the usage to-be-allowed user is another user other than a usage allowed user, and the usage allowed user is a user that has been allowed to use the vehicle; and
when a driving route plan of the usage allowed user matches the driving route plan of the usage to-be-allowed user, sending a first vehicle usage notification message to the vehicle, where the first vehicle usage notification message includes identity information of the usage to-be-allowed user and the driving route plan of the usage to-be-allowed user, so as to instruct the vehicle to execute a command that is input by the user and that is corresponding to the driving route plan of the user.

Therefore, when the vehicle is in the sharing mode, the management device may schedule the vehicle to both the usage to-be-allowed user and the usage allowed user, and send related information of the usage to-be-allowed user to the vehicle.

Optionally, before the obtaining a driving route plan of a usage to-be-allowed user, the method further includes:
obtaining the driving route plan of the usage allowed user; and
sending a second vehicle usage notification message to the vehicle, where the second vehicle usage notification message includes identity information of the usage allowed user and the driving route plan of the usage allowed user.

Therefore, when the vehicle is in the sharing mode, the management device may preobtain the driving route plan of the usage allowed user, so that the vehicle learns of related information of the usage allowed user, so as to properly arrange the usage to-be-allowed user and the usage allowed user to share the vehicle.

In some possible implementations, the obtaining a driving route plan of a usage to-be-allowed user includes:
receiving a first vehicle usage request message of the usage to-be-allowed user, where the first vehicle usage request message includes the identity information of the usage to-be-allowed user and the driving route plan of the usage to-be-allowed user.

Herein, the management device may obtain the driving route plan of the usage to-be-allowed user by receiving the first vehicle usage request message of the usage to-be-allowed user.

In some possible implementations, the obtaining the driving route plan of the usage allowed user includes:
receiving a second vehicle usage request message of the usage allowed user, where the second vehicle usage request message includes the identity information of the usage allowed user and the driving route plan of the usage allowed user.

Similarly, the management device may obtain the driving route plan of the usage allowed user by receiving the second vehicle usage request message of the usage allowed user.

With reference to the first aspect, in a second possible implementation, the scheduling the vehicle according to the mode identifier information includes:
when the mode identifier information indicates that the vehicle is in the exclusive mode, obtaining a driving route plan of the single user; and
sending a third vehicle usage notification message to the vehicle, where the third vehicle usage notification message includes identity information of the single user and the driving route plan of the single user.

Herein, when the mode identifier information of the vehicle indicates that the vehicle is in the exclusive mode, the management device may schedule the vehicle to only the single user for use, and send related information of the single user to the vehicle.

Therefore, when the vehicle is in the exclusive mode, the management device may schedule the vehicle to only the single user for use, and send the related information of the single user to the vehicle.

Optionally, in some possible implementations, the management center determines, according to the mode identifier information, a vehicle resource set corresponding to the vehicle; and
schedules the vehicle according to the vehicle resource set corresponding to the vehicle.

Optionally, the determining, according to the mode identifier information, a vehicle resource set corresponding to the vehicle includes:
when the mode identifier information indicates that the vehicle is in the sharing mode, determining that the vehicle resource set corresponding to the vehicle is a shared vehicle resource set.

Optionally, the determining, according to the mode identifier information, a vehicle resource set corresponding to the vehicle includes:
when the mode identifier information indicates that the vehicle is in the exclusive mode, determining that the vehicle resource set corresponding to the vehicle is an exclusive vehicle resource set.

Optionally, the vehicle is scheduled according to the vehicle resource set corresponding to the vehicle.

Therefore, in a specific implementation process, the management device may classify vehicles into different vehicle resource sets according to mode identifier information of the vehicles, so as to facilitate subsequent scheduling of a corresponding vehicle according to the vehicle resource sets.

According to a second aspect, a vehicle management method is provided, including:
receiving a vehicle scheduling message sent by a management device according to mode identifier information of a vehicle, where the mode identifier information indicates whether the vehicle is in a sharing mode or an exclusive mode, the sharing mode indicates that different users are allowed to share the vehicle, and the exclusive mode indicates that only a single user is allowed to use the vehicle; and
performing usage control according to the vehicle scheduling message.

According to the vehicle management method in an embodiment of the present invention, the vehicle receives the vehicle scheduling message sent by the management device according to the mode identifier information, and performs the usage control according to the vehicle scheduling message, so that the management device can dynamically adjust a vehicle resource.

For example, that the vehicle performs the usage control according to the vehicle scheduling message includes:
executing, according to a driving route plan of a user, a command that is input by the user and that is corresponding to the driving route plan of the user.

Herein, the driving route plan of the user may be an original driving route plan of the user, for example, a driving route plan of the usage to-be-allowed user in the exclusive mode of the vehicle or a driving route plan of the single user in the sharing mode of the vehicle; or may be a processed driving route plan of the usage to-be-allowed user, for example, a processed driving route plan of the usage to-be-allowed user in the sharing mode of the vehicle.

The processed driving route plan of the usage to-be-allowed user is a driving route plan obtained after the driving route plan of the usage to-be-allowed user and the driving route plan of the usage allowed user are combined or integrated.

With reference to the second aspect, in a first possible implementation, the method further includes:
obtaining the mode identifier information of the vehicle, and using the sharing mode or the exclusive mode according to the mode identifier information.

Optionally, in some possible implementations, the obtaining mode identifier information of a vehicle includes:
receiving the mode identifier information set by a user, where the user includes a vehicle owner, a user that has management permission of the vehicle, or a user that is allowed to change a status of the vehicle.

A permission level of the vehicle owner, a permission level of the user that has the management permission of the vehicle, and a permission level of the user that is allowed to change the status of the vehicle are in a descending order. In other words, the vehicle owner has highest permission of the vehicle, the user that has the management permission of the vehicle is a specified permission owner set by the vehicle owner, and the user that is allowed to change the status of the vehicle includes a user that is allowed to change the status of the vehicle and that is set by the vehicle owner or the user that has the permission of the vehicle.

Therefore, in the present invention, the mode identifier information that is received may also be set by a user. Similarly, the mode identifier information set by the user may also be provided for the management device.

With reference to the second aspect or the first possible implementation of the second aspect, in a second possible implementation, the receiving a vehicle scheduling message sent by a management device according to mode identifier information of a vehicle includes:
when the mode identifier information of the vehicle indicates that the vehicle is in the sharing mode, receiving a first vehicle usage notification message sent by the management device, where the first vehicle usage notification message includes identity information of a usage to-be-allowed user and a driving route plan of the usage to-be-allowed user, the usage to-be-allowed user is another user other than a usage allowed user, the usage allowed user is a user that has been allowed to use the vehicle, and a driving route plan of the usage allowed user matches the driving route plan of the usage to-be-allowed user.

Therefore, when the vehicle is in the sharing mode, the vehicle may further receive the first vehicle usage notification message. The first vehicle usage notification message includes the identity information of the usage to-be-allowed user and a usage time plan of the usage to-be-allowed user. In this case, the vehicle may be shared by the usage to-be-allowed user and the usage allowed user.

Optionally, in some possible implementations, before the receiving a first vehicle usage notification message sent by the management device, the method further includes:
receiving a second vehicle usage notification message sent by the management device, where the second vehicle usage notification message includes identity information of the usage allowed user and the driving route plan of the usage allowed user.

After the vehicle confirms the identity information of the usage to-be-allowed user, the usage allowed user and the usage to-be-allowed user are allowed to share the vehicle. For example, a driving route is readjusted, or the usage to-be-allowed user is picked up when convenient. The driving route plan of the usage allowed user and the driving route plan of the usage to-be-allowed user are combined for driving.

With reference to the second aspect or the first possible implementation of the second aspect, in a third possible implementation, the receiving a vehicle scheduling message sent by a management device according to mode identifier information of a vehicle includes:
when the mode identifier information of the vehicle indicates that the vehicle is in the exclusive mode, receiving a third vehicle usage notification message sent by the management device, where the third vehicle usage notification message includes identity information of the single user and a driving route plan of the single user.

Therefore, when the vehicle is in the exclusive mode, the vehicle may receive the identity information of the single user and the driving route plan of the single user, so that the vehicle is used by only the single user.

Optionally, in some possible implementations, when the vehicle is in the exclusive mode, the method further includes:
receiving a fourth vehicle usage notification message sent by the management device, where the fourth vehicle usage notification message includes identity information of a non-single user and a driving route plan of the non-single user, and the non-single user is another user other than the single user; and
sending a rejection message to the management device, where the rejection message is used to indicate rejection of executing the fourth vehicle usage notification message.

Therefore, when the vehicle is in the exclusive mode, the vehicle receives the third vehicle usage notification message, where the third vehicle usage notification message includes the identity information of the single user and a usage time plan of the single user; and afterwards, if the vehicle further receives related vehicle usage information of another user other than the single user, the vehicle may send the rejection message to the management device, to indicate rejection of executing the fourth vehicle usage notification message.

Optionally, when the vehicle is in the exclusive mode, the vehicle may also choose to receive the fourth vehicle usage notification message if the vehicle is idle, and send a response message to the management device. The response message is used to indicate that the vehicle agrees to receive the fourth vehicle usage notification message.

That is, when the vehicle is in the exclusive mode, if the vehicle is in an idle state, the vehicle may choose to receive the fourth vehicle usage notification message.

Optionally, the vehicle and the management device may determine or change the mode identifier information of the vehicle by using a negotiation mechanism.

Optionally, in some possible implementations, after the mode identifier information is provided for the management device, the method further includes:
receiving new mode identifier information from the management device; and
updating the current mode identifier information by using the new state identifier message.

The vehicle receives the mode identifier information set by the management device. The mode identifier information is mode identifier information that is for updating the vehicle and that is set or generated by the management device according to vehicle usage information of an intelligent transportation system ITS.

Optionally, in some possible implementations, the method further includes: sending the mode identifier information to the management device.

Herein, the vehicle sends the mode identifier information to the management device, so that the management device generates the vehicle scheduling message according to the mode identifier information.

Optionally, in some possible implementations, before the mode identifier information of the vehicle is provided for the management device, the method further includes:
receiving a query message sent by the management device, where the query message is used by the management device to obtain the mode identifier information.

According to a third aspect, a vehicle management apparatus is provided, where the vehicle management apparatus is configured to perform the method in the first aspect or any possible implementation of the first aspect. Specifically, the apparatus includes a unit that is configured to perform the method in the first aspect or any possible implementation of the first aspect.

According to a fourth aspect, a vehicle is provided, where the vehicle is configured to perform the method in the second aspect or any possible implementation of the second aspect. Specifically, the apparatus includes a unit that is configured to perform the method in the second aspect or any possible implementation of the second aspect.

According to a fifth aspect, a vehicle management apparatus is provided. The apparatus includes a processor, a memory, and a communications interface. The processor is connected to the memory and the communications interface. The memory is configured to store an instruction. The processor is configured to execute the instruction. The communications interface is configured to communicate with another network element under the control of the processor. When the processor executes the instruction stored in the memory, the processor performs the method in the first aspect or any possible implementation of the first aspect.

According to a sixth aspect, a vehicle apparatus is provided. The apparatus includes a processor, a memory, and a communications interface. The processor is connected to the memory and the communications interface. The memory is configured to store an instruction. The processor is configured to execute the instruction. The communications interface is configured to communicate with another network element under the control of the processor. When the processor executes the instruction stored in the memory, the processor performs the method in the second aspect or any possible implementation of the second aspect.

According to a seventh aspect, a computer readable medium is provided, where the computer readable medium is configured to store a computer program. The computer program includes an instruction that is used for performing the method in the first aspect or any possible implementation of the first aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario according to an embodiment of the present invention;
FIG. 2 is a schematic flowchart of a vehicle management method according to an embodiment of the present invention;
FIG. 3 is a schematic flowchart of a vehicle management method according to another embodiment of the present invention;
FIG. 4 is a schematic diagram of an interaction example of a vehicle management method according to an embodiment of the present invention;
FIG. 5 is a schematic block diagram of a vehicle management apparatus according to an embodiment of the present invention;
FIG. 6 is a schematic block diagram of a vehicle according to an embodiment of the present invention;
FIG. 7 is a structural diagram of a vehicle management apparatus according to another embodiment of the present invention; and
FIG. 8 is a structural diagram of a vehicle apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

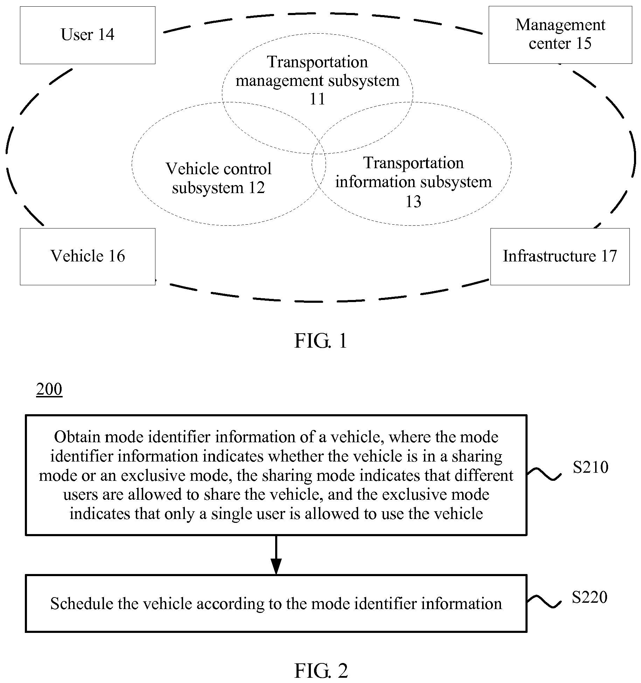

The technical solutions of the present invention may be applied to scenarios such as an intelligent transportation system (ITS) or an ITS based on an Internet of Things (Internet of Things, "IoT" for short) technology. According to the intelligent transportation system, an advanced information technology, a data communication technology, a sensor technology, an electronic control technology, a computer technology, and the like are effectively integrated to be used in an entire transportation management system, so as to establish a comprehensive transportation and management system that plays an all-round role in a wide range, for example, an urban transportation intelligent scheduling system, a motor vehicle auto control system, a station passenger flow grooming system, and a highway intelligent scheduling system. FIG. 1 shows a schematic diagram of an application scenario of an intelligent transportation system according to an embodiment of the present invention. It should be noted that the example in FIG. 1 is intended to help a person skilled in the art better understand this embodiment of the present invention, instead of limiting the scope of this embodiment of the present invention.

As shown in FIG. 1, the intelligent transportation system may include a transportation management subsystem 11, a vehicle control subsystem 12, and a transportation information subsystem 13, and the like. Main transportation participants in the system include: a user 14, a management center 15, a vehicle 16, an infrastructure 17, and the like. The transportation management subsystem 11 is responsible for coordinating and controlling actions of the transportation participants (including 14, 15, 16, and 17) according to transportation information. The vehicle control subsystem 12 is responsible for safely and efficiently controlling driving of the vehicle 16. The transportation information subsystem 13 is responsible for correctly collect, process, and exchange information about the transportation participants (including 14, 15, 16, and 17) in time. Both the user 14 and the vehicle 16 are general terms. The user 14 may include multiple users, and the vehicle 16 may include multiple vehicles.

The user in this embodiment of the present invention may be a vehicle owner, a permission owner specified by the vehicle owner, or a user allowed by the vehicle owner to use the vehicle. Generally, identity authentication information of the vehicle owner is set when the vehicle is sold or delivered. The vehicle owner has highest permission, and the vehicle owner may set more users that are allowed by the vehicle owner to use the vehicle. The vehicle also saves identity authentication information of the users allowed by the vehicle owner, and sends, to the management center, the saved identity authentication information of the vehicle owner or the user allowed by the vehicle owner to use the vehicle

It should be understood that the identity authentication information of the user may include a user password (for example, a password identified based on input viaa button, a touch sense, or a gesture), an identifier card (for example, identification is performed according to an identity card, a phone card, or a key card), a biometric feature (for example, identification is performed according to a fingerprint, a face, an iris), and the like. This is not limited herein.

In this embodiment of the present invention, the user and the vehicle interact in a relatively flexible manner. For example, the user may input identity authentication information by using a man-machine interaction interface, so as to interact with the vehicle.

FIG. 2 shows a schematic flowchart of a vehicle management method 200 according to an embodiment of the present invention. The method is performed by the management center 15 in FIG. 1. For example, the management center may be a management device or a control center. The following uses the management center as an example for description. The method 200 includes:

S210. Obtain mode identifier information of a vehicle, where the mode identifier information indicates whether the vehicle is in a sharing mode or an exclusive mode, the sharing mode indicates that different users are allowed to share the vehicle, and the exclusive mode indicates that only a single user is allowed to use the vehicle.

S220. Schedule the vehicle according to the mode identifier information.

In this embodiment of the present invention, the management center obtains the mode identifier information of the vehicle. The mode identifier information is used to indicate whether the vehicle is in the sharing mode or the exclusive mode. The management center schedules the vehicle according to the mode identifier information to provide a transportation service, so as to dynamically adjust a vehicle resource.

In this embodiment of the present invention, the different users may be at least two different users, and the single user may be one single user.

In this embodiment of the present invention, the mode identifier information may be received by the management center from the vehicle, or may be determined by the management center according to vehicle usage information of an intelligent transportation system ITS or a transportation service requirement. The management center may schedule or manage a vehicle in the ITS according to the mode identifier information obtained in any manner.

The mode identifier information may be a state identifier set by the user or the management center for the vehicle. The mode identifier information is used to identify whether the vehicle is in the sharing mode or the exclusive mode, or used to indicate whether the vehicle can be shared. The mode identifier information may be implemented by using a flag bit. A data type of the mode identifier information may be an enumeration type, and a value includes sharing or exclusive. Alternatively, a data type of the mode identifier information may be an integer type, and a value includes 0 and 1, where the values 0 and 1 may be respectively corresponding to the exclusive mode and the sharing mode. Optionally, the mode identifier information further includes an effective duration of a state, for example, an effective duration of the exclusive mode or an effective duration of the sharing mode.

It should be understood that a value of the identifier bit of the mode identifier information corresponding to the sharing mode or the exclusive mode may be set according to a requirement, and the sharing mode or the exclusive mode does not necessarily to be corresponding to a specific value.

It should be noted that in this embodiment of the present invention, the mode identifier information (including a state identifier value corresponding to the mode identifier information and a meaning of a value of the mode identifier information) is uniformly defined in the ITS and is understood by all participants in the ITS.

Therefore, according to the vehicle management method in this embodiment of the present invention, the management center schedules the vehicle according to the mode identifier information of the vehicle, so as to dynamically adjust the vehicle resource.

Optionally, after the obtaining mode identifier information of a vehicle, the method further includes:
sending the mode identifier information to the vehicle, so that the vehicle uses the sharing mode or the exclusive mode.

The management center sends the mode identifier information to the vehicle. Therefore, the vehicle uses the corresponding sharing mode or the exclusive mode according to the mode identifier information, or the management center enables the vehicle to be in the sharing mode or the exclusive mode.

Optionally, in an embodiment, the scheduling the vehicle according to the mode identifier information includes:
when the mode identifier information indicates that the vehicle is in the sharing mode, obtaining a driving route plan of a usage to-be-allowed user, where the usage to-be-allowed user is another user other than a usage allowed user, the usage allowed user is a user that has been allowed to use the vehicle, and the sharing mode indicates that at least two people are allowed to use the vehicle; and
when a driving route plan of the usage allowed user matches the driving route plan of the usage to-be-allowed user, sending a first vehicle usage notification message to the vehicle, where the first vehicle usage notification message includes identity information of the usage to-be-allowed user and the driving route plan of the usage to-be-allowed user.

Specifically, if the mode identifier information indicates that the vehicle is in the sharing mode, the management center determines that the vehicle may be scheduled to both the usage allowed user and the usage to-be-allowed user for use. The usage allowed user is a user of the vehicle, and the usage to-be-allowed user is another user other than the usage allowed user. The management center obtains the driving route plan of the usage to-be-allowed user. When the management center determines that the driving route plan of the usage allowed user matches the driving route plan of the usage to-be-allowed user, the management center determines to schedule the vehicle to both the usage allowed user and the usage to-be-allowed user for use, and sends the first vehicle usage notification message to the vehicle. The first vehicle usage notification message includes the identity information of the usage to-be-allowed user and the driving route plan of the usage to-be-allowed user. In other words, when the vehicle is in the sharing mode, multiple users may be allowed to share the vehicle. Driving route plans of these users are the same or similar. The usage to-be-allowed user and the usage allowed user are different users in the foregoing-mentioned "different users" in the sharing mode.

In this embodiment of the present invention, that the driving route plan of the usage allowed user matches the driving route plan of the usage to-be-allowed user means that the driving route plans are the same or similar. For example, a driving route of the usage allowed user overlaps with a driving route of the usage to-be-allowed user, or a route can be modified in an acceptable degree for a pick-up.

In addition, if the driving route plan of the usage to-be-allowed user does not match the driving route plan of the vehicle, the management center may perform selection from other vehicles in the sharing mode, so as to schedule a proper vehicle for the usage to-be-allowed user.

Optionally, before the obtaining a driving route plan of a usage to-be-allowed user, the method further includes:
obtaining the driving route plan of the usage allowed user; and
sending a second vehicle usage notification message to the vehicle, where the second vehicle usage notification message includes identity information of the usage allowed user and the driving route plan of the usage allowed user.

Certainly, before obtaining the driving route plan of the usage to-be-allowed user, the management center may preobtain the driving route plan of the usage allowed user, and schedule, according to the driving route plan of the usage allowed user, the vehicle to the usage allowed user for use. After obtaining the driving route plan of the usage to-be-allowed user, the management center may integrate the driving route plan of the usage allowed user and the driving route plan of the usage to-be-allowed user, and schedule, according to an integrated driving route plan, the vehicle to both the usage allowed user and the usage to-be-allowed user for use. Herein, before the vehicle is scheduled to both the usage allowed user and the usage to-be-allowed user for use or before the driving route plan of the usage to-be-allowed user is obtained, even though the mode identifier information of the vehicle indicates that the vehicle is in the sharing mode, the vehicle may be temporarily used by only the usage allowed user. This is not limited herein.

Optionally, the obtaining a driving route plan of a usage to-be-allowed user includes:
receiving a first vehicle usage request message of the usage to-be-allowed user, where the first vehicle usage request message includes the identity information of the usage to-be-allowed user and the driving route plan of the usage to-be-allowed user.

Specifically, the management center may receive the first vehicle usage request message of the usage to-be-allowed user. The first vehicle usage request message includes the identity information of the usage to-be-allowed user and the driving route plan of the usage to-be-allowed user. When determining to schedule the vehicle to both the usage allowed user and the usage to-be-allowed user for use, the management center sends the first vehicle usage notification message to the vehicle. The first vehicle usage notification message includes the identity information of the usage to-be-allowed user and the driving route plan of the usage to-be-allowed user. Therefore, the vehicle authenticates the identity information of the usage to-be-allowed user according to the first vehicle usage notification message, and performs related processing according to the driving route plan of the usage to-be-allowed user. That is, when determining to schedule the vehicle to a user with a matched driving route plan, the management center may send a notification message to the vehicle. The notification message is used to instruct the vehicle to make related preparation. The notification message may include identity information and a get-on/off plan of an allowed sharing-required user. For example, the sharing-required user is the usage to-be-allowed user. The identity information may be identity authentication information or permission information of the usage to-be-allowed user, and the get-on/off plan is a get-on/off time or specific location information of the usage to-be-allowed user.

Optionally, the obtaining the driving route plan of the usage allowed user includes:
receiving a second vehicle usage request message of the usage allowed user, where the second vehicle usage request message includes the identity information of the usage allowed user and the driving route plan of the usage allowed user.

Specifically, the management center may receive the second vehicle usage request message of the usage allowed user. The first vehicle usage request message includes the identity information of the usage allowed user and the driving route plan of the usage allowed user. The management center determines, according to the driving route plan of the usage allowed user, to schedule the vehicle to the usage allowed user, and sends the second vehicle usage notification message to the vehicle. The second vehicle usage notification message includes the identity information of the usage allowed user and the driving route plan of the usage allowed user, so that the vehicle authenticates the identity information of the usage allowed user according to the second vehicle usage notification message, and travels according to the driving route plan of the usage allowed user.

It should be understood that a time and a channel for receiving or sending the identity information and a time and a channel for receiving or sending the driving route plan of the user are not limited in this embodiment of the present invention. The identity information and the driving route plan may be received or sent at a same time or at different times, and may also be carried in another proper message. This is not limited herein.

Optionally, in an actual data implementation process, for example, that the management center may determine, according to the mode identifier information, a vehicle resource set corresponding to the vehicle includes:
when the mode identifier information indicates that the vehicle is in the sharing mode, determining that the vehicle resource set corresponding to the vehicle is a shared vehicle resource set.

Optionally, the management center schedules the vehicle according to the vehicle resource set corresponding to the vehicle.

Specifically, the management center adds the vehicle into the shared vehicle resource set when the mode identifier information indicates that the vehicle is in the sharing mode. In a duration in which the vehicle can be shared, the management center receives a request message from the usage to-be-allowed user, where the usage to-be-allowed user is another user other than a current user of the vehicle; then matches the driving route plan of the usage to-be-allowed user with a driving route plan of each vehicle in the shared vehicle resource set; and when determining that the driving route plan of the usage to-be-allowed user matches the driving route plane of the usage allowed user, determines to schedule the vehicle to both the usage allowed user and the usage to-be-allowed user for use.

In this embodiment of the present invention, that the driving route plan of the usage allowed user matches the driving route plan of the usage to-be-allowed user means that the driving route plans are the same or similar. For example, a driving route of the usage allowed user overlaps with a driving route of the usage to-be-allowed user, or a route can be modified in an acceptable degree for a pick-up.

For example, when current mode identifier information of the vehicle is set to the sharing mode by a current user A, the management center adds the vehicle to the shared vehicle resource set after receiving the mode identifier information of the vehicle. In this case, if a user B sends, to the management center, a vehicle usage application request attached with identity information and a driving route of B, after the management center receives the request of B, the management center finds, from the shared vehicle resource set, A whose driving route plan is similar to or the same as the driving route of B, and the management center determines to combine the driving route of B with the driving route of A, that is, the management center adjusts the route or use a route the same as an original route, so that A and B can share the vehicle.

It should be understood that in this embodiment of the present invention, a quantity of vehicles in the ITS or a quantity of users in the ITS is not limited, the usage allowed user and the usage to-be-allowed user are only used as an example herein for description, and processing should be flexibly performed according to a situation in practice.

It should be further understood that in this embodiment of the present invention, serial numbers "first", "second", and the like are merely used for distinguishing between different objects such as different users, and are not intended to limit the scope of this embodiment of the present invention. The present invention is not limited thereto.

Therefore, according to the vehicle management method in this embodiment of the present invention, the management center schedules the vehicle according to the mode identifier information of the vehicle, so as to dynamically adjust the vehicle resource.

Optionally, in an embodiment, the scheduling the vehicle according to the mode identifier information includes:
when the mode identifier information indicates that the vehicle is in the exclusive mode, obtaining a driving route plan of the single user; and
sending a third vehicle usage notification message to the vehicle, where the third vehicle usage notification message includes identity information of the single user and the driving route plan of the single user.

Specifically, if the mode identifier information indicates that the vehicle is in the exclusive mode, the management center determines that the vehicle may be scheduled to the single user, where the exclusive mode indicates that only the single user is allowed to use the vehicle. The management center obtains the driving route plan of the single user, determines to schedule the vehicle to the single user for use, and sends the third vehicle usage notification message to the vehicle. The third vehicle usage notification message includes the identity information of the single user and the driving route plan of the single user. Therefore, after confirming the identity information of the single user, the vehicle can travel according to the driving route plan of the single user.

Optionally, the obtaining the driving route plan of the single user includes:
receiving a vehicle usage request message of the single user, where the vehicle usage request message includes the identity information of the single user and the driving route plan of the single user.

Optionally, in an actual data implementation process, for example, that the management center may determine, according to the mode identifier information, a vehicle resource set corresponding to the vehicle includes:
when the mode identifier information indicates that the vehicle is in the exclusive mode, determining that the vehicle resource set corresponding to the vehicle is an exclusive vehicle resource set.

Optionally, that the management center schedules the vehicle according to the vehicle resource set corresponding to the vehicle includes:
scheduling the vehicle according to the driving route plan of the single user of the vehicle.

Specifically, when the mode identifier information is exclusive mode identifier information, the management center adds the vehicle to the exclusive vehicle resource set, and then schedules the vehicle according to the driving route plan of the single user of the vehicle. After the management center receives the exclusive mode identifier information of the vehicle, in an effective duration of the exclusive mode of the vehicle, the management center performs scheduling according to only the driving route plan of the single user of the vehicle. For example, the usage allowed user is the current user of the vehicle. That is, in the ITS, the management center schedules the vehicle of the driving route plan of the single user in a whole-process coordination planning manner. Certainly, the management center may send a notification message to the vehicle. The notification message carries the driving route plan and the identity information of the single user. In an actual ITS environment, a vehicle owner or a vehicle property owner may not use his/her own vehicle because the vehicle may have been scheduled to another user for use. Therefore, to use the vehicle, the vehicle owner or the vehicle property owner needs to further make an application to the management center to authenticate an identity.

Therefore, according to the vehicle management method in this embodiment of the present invention, the management center schedules the vehicle according to the mode identifier information of the vehicle, so as to dynamically adjust the vehicle resource.

Optionally, in an embodiment, S210 includes:
receiving the mode identifier information from the vehicle.

Specifically, the management center may receive the mode identifier information provided or sent by the vehicle, and then use the mode identifier information as a reference for managing a related activity and matter. Herein, the mode identifier information sent by the vehicle is mode identifier information set by the user for the vehicle. That is, the management center may schedule the vehicle according to the mode identifier information sent by the vehicle, to provide a transportation service.

Optionally, before the receiving the mode identifier information from the vehicle, the method may further include:
sending a query message to the vehicle, where the query message is used to obtain the mode identifier information.

In other words, the management center may send a query request to the vehicle, and actively query the mode identifier information of the vehicle.

Optionally, in an embodiment, S210 further includes:
generating the mode identifier information according to vehicle usage information of an intelligent transportation system ITS.

Optionally, the management center sets the mode identifier information for the vehicle.

In this embodiment of the present invention, mode identifier information set by the management center and mode identifier information set by the user have an equal effect. The management center sends the mode identifier information to the vehicle, or directly sets the mode identifier information for the vehicle. The management center schedules the vehicle according to the mode identifier information of the vehicle, to dynamically adjust the vehicle resource.

In this embodiment of the present invention, a function of the vehicle usage information may be understood as that when a vehicle needs to be scheduled in an area in the ITS, the management device may determine, with reference to vehicle usage information of all vehicles managed by the management device in the ITS, whether to schedule a vehicle to provide a service in the area, or whether to schedule a vehicle out of the area. For example, the vehicle usage information may be an element such as a distance between a vehicle and a dense crowd area.

For example, the management center may adjust mode identifier information of a vehicle in the ITS in real time according to a scheduling requirement in the ITS, and send the mode identifier information to the vehicle; or the management center directly sets the mode identifier information for the vehicle. For example, because an area (a dense crowd area, an arterial road, and the like) in the ITS is prone to traffic congestion, to improve utilization of a vehicle and release a vehicle flow burden, when a vehicle is driven into the area, the management center compels the vehicle to enable a sharing mode, that is, the management center compellingly sets mode identifier information of the vehicle to the sharing mode, where the mode identifier information is attached with a sharing mode identifier parameter and an effective duration. When the management center compels the vehicle to enable the sharing mode, another user in the area may share a shared vehicle in the area by means of scheduling by the management center. In this case, a user in the area may not need to own a vehicle, and use a shared vehicle in the area to implement shuttling (transferring or getting on a vehicle) in the area. For example, the user in the area may temporarily park his/her own vehicle outside the area. In an actual operation, the management center may provide a proper return for the vehicle that is compellingly switched to the sharing mode.

When changing the mode identifier information of the vehicle, the management center may simultaneously save an effective duration and a status of the vehicle before the vehicle is compelled to enable the sharing mode, so as to recover the vehicle to an original exclusive or sharing mode after the duration of the compelled sharing mode ends. For example, when the vehicle leaves the foregoing area, the management center instructs the vehicle to end the compelled sharing mode, and attaches a state identifier parameter of the vehicle before the compelled sharing mode.

Certainly, instead of compellingly sharing, the management center may maintain, according to a requirement, an original status of some specific or professional vehicles (such as a police car and an ambulance) that are driven into the area.

Therefore, according to the vehicle management method in this embodiment of the present invention, the management center sets the mode identifier information for the vehicle, and schedules the vehicle according to the mode identifier information of the vehicle, so as to dynamically adjust the vehicle resource.

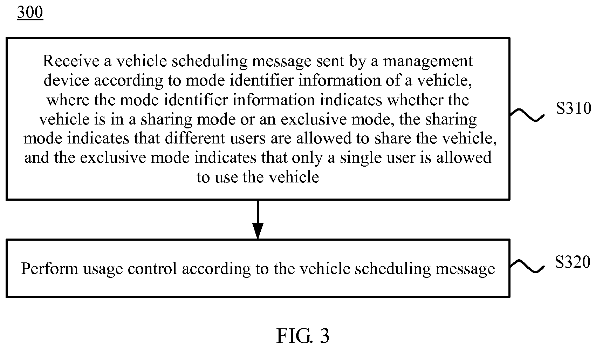

The foregoing describes the vehicle management method according to this embodiment of the present invention from the perspective of the management center, and the following describes a vehicle management method according to an embodiment of the present invention from a vehicle side with reference to FIG. 3.

FIG. 3 shows a schematic flowchart of a vehicle management method 300 according to an embodiment of the present invention. The method is performed by a vehicle. Specifically, the method may be performed by a vehicle-mounted device of the vehicle or a proper device that is of the vehicle and that can communicate with a management center of an ITS. This is not limited herein. The method 300 includes:

S310. Receive a vehicle scheduling message sent by a management device according to mode identifier information of a vehicle, where the mode identifier information indicates whether the vehicle is in a sharing mode or an exclusive mode, the sharing mode indicates that different users are allowed to share the vehicle, and the exclusive mode indicates that only a single user is allowed to use the vehicle.

S320. Perform usage control according to the vehicle scheduling message.

In this embodiment of the present invention, the vehicle receives the vehicle scheduling message sent by the management device according to the mode identifier information, and performs the usage control according to the vehicle scheduling message, so that the management device can dynamically adjust a vehicle resource.

For example, that the vehicle performs the usage control according to the vehicle scheduling message includes:
executing, according to a driving route plan of a user, a command that is input by the user and that is corresponding to the driving route plan of the user.

The command corresponding to the driving route plan of the user may include: a command that is of a driving route plan and that is input by the user in the exclusive mode, or a command that is of a driving route plan and that is input by the user in the sharing mode. The driving route plan in the sharing mode may also be a driving route plan of the user before processing is performed, or a processed driving route plan of the user. The "processing" is combing or integrating multiple driving route plans. In other words, the driving route plan in the exclusive mode does not need to be processed, and the command that is of the driving route plan and that is input by the user may be directly executed. However, the driving route plan in the sharing mode may be obtained after some processing is performed on driving route plans of multiple users, and finally, a command of a processed driving route plan is performed.

That is, the driving route plan of the user may be an original driving route plan of the user, for example, a driving route plan of the single user in the exclusive mode of the vehicle or a driving route plan of the usage to-be-allowed user in the sharing mode of the vehicle; or may be a processed driving route plan of the usage to-be-allowed user, for example, a processed driving route plan the user in the sharing mode of the vehicle. The processed driving route plan of the user is a driving route plan obtained after the driving route plan of the usage to-be-allowed user and the driving route plan of the usage allowed user are combined or integrated.

Therefore, according to the vehicle management method in this embodiment of the present invention, the vehicle receives the vehicle scheduling message sent by the management device according to the mode identifier information, and performs the usage control according to the vehicle scheduling message, so that the management device can dynamically adjust the vehicle resource.

Optionally, the method further includes:
obtaining the mode identifier information of the vehicle, and using the sharing mode or the exclusive mode according to the mode identifier information.

In this embodiment of the present invention, the single user may be one single user.

Specifically, the vehicle obtains the mode identifier information of the vehicle, and uses the sharing mode or the exclusive mode according to the mode identifier information. The sharing mode indicates that at least two different users are allowed to share the vehicle, and the exclusive mode identifier information is used to indicate that only a single user is allowed to use the vehicle. The vehicle may provide the mode identifier information for the management device, so that the management device generates a vehicle usage notification message according to the mode identifier information. Therefore, the vehicle can implement a corresponding execution action according to different mode identifier information.

Optionally, the obtaining the mode identifier information of the vehicle includes:
receiving the mode identifier information set by a user, where the user includes a vehicle owner, a user that has management permission of the vehicle, or a user that is allowed to change a status of the vehicle.

Specifically, the vehicle may receive the mode identifier information set by the user, and sends the mode identifier information to the management center, so that the management center determines, according to the mode identifier information, a vehicle resource set corresponding to the vehicle.

Herein, the user represents a common name of users that can set a vehicle status, and has no other presumable ambiguity. Certainly, the user is not limited to a vehicle owner. The user may include the vehicle owner, the user that has permission of the vehicle, or the user that is allowed to change the status of the vehicle. Specifically, for example, the user may include: the vehicle owner (that has highest permission of the vehicle and can be set when the vehicle is delivered), a permission owner specified by the vehicle owner (the vehicle owner may set multiple users that has the permission of the vehicle, and the permission of the multiple users is lower than only the permission of the vehicle owner), and another user (that has lowest permission and that is allowed to change only the vehicle status) that is set by the vehicle owner or the permission owner specified by the vehicle owner and that is allowed to change the vehicle status. The vehicle owner or the permission owner specified by the vehicle owner has permission to set whether to allow another user of the vehicle to change the mode identifier information of the vehicle in a usage duration. That is, each of the vehicle owner, the permission owner specified by the vehicle owner, and the another user that is set by the vehicle owner or the permission owner specified by the vehicle owner and that is allowed to change the vehicle status may set the mode identifier information of the vehicle.

Specifically, for example, when a management user plans to drive the vehicle to perform some activities or matters and drives through a road in a period, if the management user has no intention of sharing the vehicle with another user in the ITS (similar to a pick-up when convenient), the management user may set the mode identifier information of the vehicle to the exclusive mode and set an effective duration of the state. After receiving the mode identifier information set by the management user, the vehicle sends the mode identifier information to a management device (a control center, a scheduling center, or a management center) in the ITS. The parameter value of the mode identifier information indicates that the mode identifier information includes the corresponding effective duration and the vehicle is currently in the exclusive mode. After receiving the mode identifier information, the management center adds the vehicle to an exclusive vehicle resource set for management. During this period, the vehicle is scheduled according to only a driving route plan of the management user.

For another example, when a management user plans to drive the vehicle to perform some activities or matters and drives through a road in a period, if the management user has an intention of sharing the vehicle with another user in the ITS (similar to a pick-up when convenient), the management user may set the mode identifier information of the vehicle to the sharing mode and set an effective duration of the state. After receiving the mode identifier information set by the management user, the vehicle sends the mode identifier information to a management center (a control center, a scheduling center, or a management center) in the ITS. The mode identifier information includes the corresponding effective duration and a parameter value that indicates that the vehicle is currently in the sharing mode. After receiving a report message, the management center adds the vehicle into a shared vehicle resource set for management.

Therefore, according to the vehicle management method in this embodiment of the present invention, the vehicle receives the vehicle scheduling message sent by the management device according to the mode identifier information, and performs the usage control according to the vehicle scheduling message, so that the management device can dynamically adjust the vehicle resource.

Optionally, the obtaining the mode identifier information of the vehicle includes:
receiving new mode identifier information from the management device; and
updating the mode identifier information according to the new state identifier message.

That is, the mode identifier information of the vehicle may be mode identifier information generated or set by the management center according to a transportation service scheduling requirement or vehicle usage information of the ITS. A method for determining the mode identifier information by the management center according to a scheduling requirement of the ITS is described above, and details are not described herein again. After receiving the mode identifier information set by the management center, the vehicle updates the mode identifier information of the vehicle according to the mode identifier information. For example, when the management center needs the vehicle to be set to the sharing mode, the vehicle changes the original exclusive mode to the sharing mode. In addition, after an effective duration of a changed state ends, the vehicle may receive a notification message from the management center, and be recovered to an original state.

Optionally, the method further includes:
sending the mode identifier information to the management device.

Optionally, before the mode identifier information of the vehicle is provided for the management device, the method further includes:
receiving a query message sent by the management device, where the query message is used by the management device to obtain the mode identifier information.

Optionally, the receiving a vehicle scheduling message sent by a management device according to mode identifier information of a vehicle includes:
when the mode identifier information of the vehicle indicates that the vehicle is in the sharing mode, receiving a first vehicle usage notification message sent by the management device, where the first vehicle usage notification message includes identity information of a usage to-be-allowed user and a driving route plan of the usage to-be-allowed user, the usage to-be-allowed user is another user other than a usage allowed user, the usage allowed user is a user that has been allowed to use the vehicle, and a driving route plan of the usage allowed user matches the driving route plan of the usage to-be-allowed user.

Optionally, before the receiving a first vehicle usage notification message sent by the management device, the method further includes:
receiving a second vehicle usage notification message sent by the management device, where the second vehicle usage notification message includes identity information of the usage allowed user and the driving route plan of the usage allowed user.

Specifically, when the mode identifier information of the vehicle indicates that the vehicle is in the sharing mode, the vehicle may further receive the second vehicle usage notification message before receiving the first vehicle usage notification message. The second vehicle usage notification message includes the identity information of the usage allowed user and the driving route plan of the usage allowed user. The driving route plan of the usage allowed user matches the driving route plan of the usage to-be-allowed user. That is, when the vehicle is in the sharing mode, the vehicle may receive the first vehicle usage notification message, and may further receive the second vehicle usage notification message sent by the management device. The second vehicle usage notification message includes the identity information of the usage allowed user and the driving route plan of the usage allowed user. In the sharing mode, before confirming the identity information of the usage to-be-allowed user, the vehicle also needs to authenticate the identity information of the usage allowed user. After completing the authentication, the vehicle allows the usage allowed user and the usage to-be-allowed user to share the vehicle. In other words, the usage allowed user also needs to provide identity authentication information and a get-on/off plan of the usage allowed user. Then, according to a get-on/off plan of the usage to-be-allowed user, the vehicle adjusts and updates the original driving route plan of the usage allowed user, or keeps the original driving route plan of the usage allowed user unchanged, so that the usage to-be-allowed user and the usage allowed user can share the vehicle to participate in an activity or a matter.

For example, when the vehicle is in the sharing mode, if another user sends a vehicle usage requirement message to the management center, the management center matches a driving route plan of the another user with a driving route plan of a current user of each vehicle in the shared vehicle resource set. If a vehicle whose driving route plan is the same as or similar to the driving route plan of the another user (for example, routes completely overlap, or a route can be modified in an acceptable degree) is found in the shared vehicle resource set, the management center determines to schedule the vehicle to the another user for use, and sends a notification message to the vehicle. The notification message includes identity authentication information and a get-on/off plan of the user. After receiving the notification message, the vehicle first confirms identity information of the user. Only after usage permission is confirmed, the another user can share the vehicle with the current user to complete a driving route. Certainly, the another user herein may be multiple users. The vehicle may be shared provided that routes or driving route plans of the multiple users are similar or same, and driving matters of the multiple users can be implemented after a vehicle route is adjusted within an acceptable range.

Optionally, the receiving a vehicle scheduling message sent by a management device according to mode identifier information of a vehicle includes:
when the mode identifier information of the vehicle indicates that the vehicle is in the exclusive mode, receiving a third vehicle usage notification message sent by the management device, where the third vehicle usage notification message includes identity information of the single user and a driving route plan of the single user.

Specifically, when the vehicle is in the exclusive mode, the vehicle may receive the third vehicle usage notification message. The third vehicle usage notification message includes the identity information of the single user and the driving route plan of the single user, so that the vehicle is provided for only the single user to use.

Therefore, according to the vehicle management method in this embodiment of the present invention, the vehicle receives the vehicle scheduling message sent by the management device according to the mode identifier information, and performs the usage control according to the vehicle scheduling message, so that the management device can dynamically adjust the vehicle resource.

Optionally, when the vehicle is in the exclusive mode, the method further includes:
receiving a fourth vehicle usage notification message sent by the management device, where the fourth vehicle usage notification message includes identity information of a non-single user and a driving route plan of the non-single user, and the non-single user is another user other than the single user; and
sending a rejection message to the management device, where the rejection message is used to indicate rejection of executing the fourth vehicle usage notification message.

Specifically, when the mode identifier information of the vehicle indicates that the vehicle is in the exclusive mode, the exclusive mode indicates that only the single user is allowed to use the vehicle, and the mode identifier information is obtained by the vehicle. The vehicle receives the fourth vehicle usage notification message sent by the management device. The fourth vehicle usage notification message includes the identity information of the non-single user and a usage time plan of the non-single user. The non-single user is another user other than the single user. In this case, after the vehicle receives the third vehicle usage notification message, the single user has used the vehicle in the exclusive mode. Therefore, the vehicle sends the rejection message to the management device. The rejection message is used to indicate rejection of executing the fourth vehicle usage notification message.

Optionally, when the mode identifier information of the vehicle indicates that the vehicle is in the exclusive mode, a negotiation mechanism may be used between the vehicle and the management device, to change the mode identifier information. For example, when the vehicle receives the fourth vehicle usage notification message and the fourth vehicle usage notification message includes the identity information of the non-single user and the driving route plan of the non-single user, if the vehicle is idle at this moment, the vehicle may respond to the driving route plan of the non-single user, and send a response message to the management device, to provide the vehicle for a new user to use; or if the vehicle is currently occupied, the vehicle may choose to reject a request of the new user, and send a rejection message to the management device. Certainly, as a management device that has highest permission in the ITS, in some special emergency cases, the management device may compellingly schedule a vehicle. For example, the management device compellingly schedules a vehicle in the exclusive mode to a dense crowd area. That is, herein, even though the vehicle sends the rejection message, the management device may compel the vehicle. This is not limited.

It should be noted that the management device in the ITS learns of the mode identifier information of the vehicle. If there is no special or emergent case, the management device may schedule the vehicle according to the mode identifier information of the vehicle. Certainly, it is also possible that the management device compelling changes the mode identifier information of the vehicle in an emergency case.

Therefore, according to the vehicle management method in this embodiment of the present invention, the vehicle receives the vehicle scheduling message sent by the management device according to the mode identifier information, and performs the usage control according to the vehicle scheduling message, so that the management device can dynamically adjust the vehicle resource.

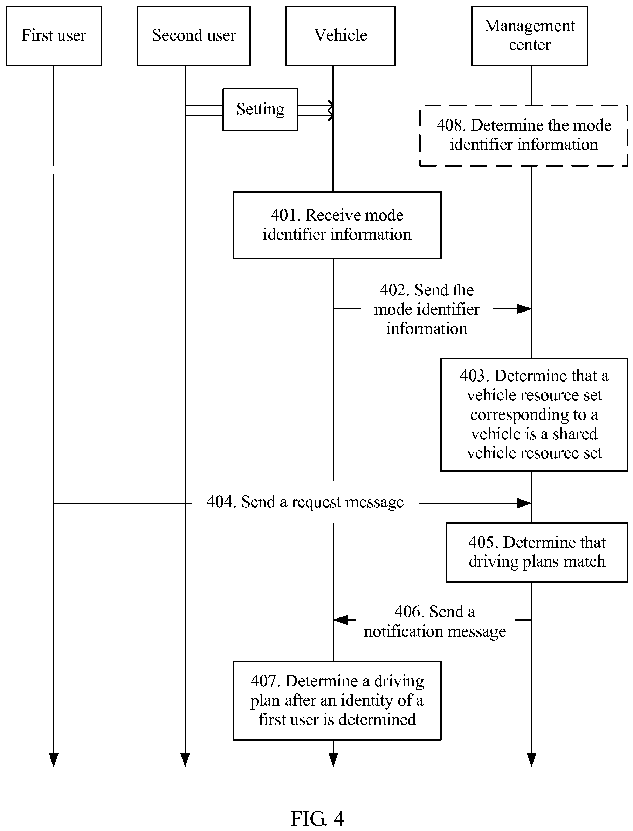

With reference to FIG. 4, the following describes a vehicle management method according to an embodiment of the present invention. FIG. 4 shows a schematic diagram of an interaction example of the method according to this embodiment of the present invention. It should be noted that this is merely intended to help a person skilled in the art better understand this embodiment of the present invention, but are not intended to limit the scope of this embodiment of the present invention. As shown in FIG. 4, a management center may be the management center 15 in FIG. 1, a vehicle is one of the vehicles 16 in FIG. 1, a first user is another user other than a second user, and the second user is a current user of the vehicle. The method includes:

S401. The vehicle receives mode identifier information set by the second user, where the mode identifier information indicates whether the vehicle is in a sharing mode.

The vehicle receives the mode identifier information set by the second user. Herein, description is provided by using an example that the second user sets a status of the vehicle to the sharing mode.

S402. The vehicle sends the mode identifier information to the management center.

After the vehicle sends the mode identifier information to the management center, the management center receives the mode identifier information sent by the vehicle.

S403. The management center determines that a vehicle resource set corresponding to the vehicle is a shared vehicle resource set.

Herein, the management center classifies the vehicle into the shared vehicle resource set. Certainly, if the mode identifier information indicates that the vehicle is in an exclusive mode, the management center adds the vehicle into an exclusive vehicle resource set. Herein, a shared vehicle resource set corresponding to the sharing mode is used as an example for description.

S404. The management center receives a request message sent by the first user.

The first user is another user other than the current user of the vehicle. The first user sends, to the management center, a vehicle usage request message attached with identity authentication information and a driving plan of the first user.

S405. The management center determines that driving plans match.

Herein, the management center determines that the driving plan of the first user matches a driving plan of the second user, so that the first user may be picked up, or the route may be modified within an acceptable range.

S406. The management center sends a notification message to the vehicle.

The management center sends the notification message to the vehicle. The notification message carries the identity authentication information and the driving plan of the first user.

S407. The vehicle determines a driving plan after determining an identity of the first user.

After receiving the notification message from the management center, the vehicle needs to confirm the identity of the first user. After the identity or permission of the first user is confirmed, the first user and the second user are allowed to share the vehicle. The vehicle adjusts the driving plan, or is driven according to an original route.

Optionally, in S408, the management center may also determine the mode identifier information.

Herein, description is provided by using an example that the vehicle is set to the sharing mode according to the mode identifier information. When the vehicle is set to the exclusive mode according to the mode identifier information (not shown in the figure), processing may be performed with reference to the foregoing method in the exclusive mode. Details are not described herein again.

It should be understood that the first user and the second user are merely examples for description herein. The method in this embodiment of the present invention is also applicable to an actual application in which more users share a vehicle resource, so as to meet a vehicle service requirement of each user. Therefore, the management center determines, according to the mode identifier information of the vehicle, the vehicle resource set corresponding to the vehicle, and schedules the vehicle according to the vehicle resource set corresponding to the vehicle, so that the first user and the second user can share the vehicle, so as to flexibly allocate the vehicle.

It should be understood that sequence numbers of the foregoing processes do not mean execution sequences in various embodiments of the present invention. The execution sequences of the processes should be determined according to functions and internal logic of the processes, and should not be constructed as any limitation on the implementation processes of the embodiments of the present invention.

The foregoing describes in detail the vehicle management method according to this embodiment of the present invention, and the following describes a vehicle management apparatus according to an embodiment of the present invention.

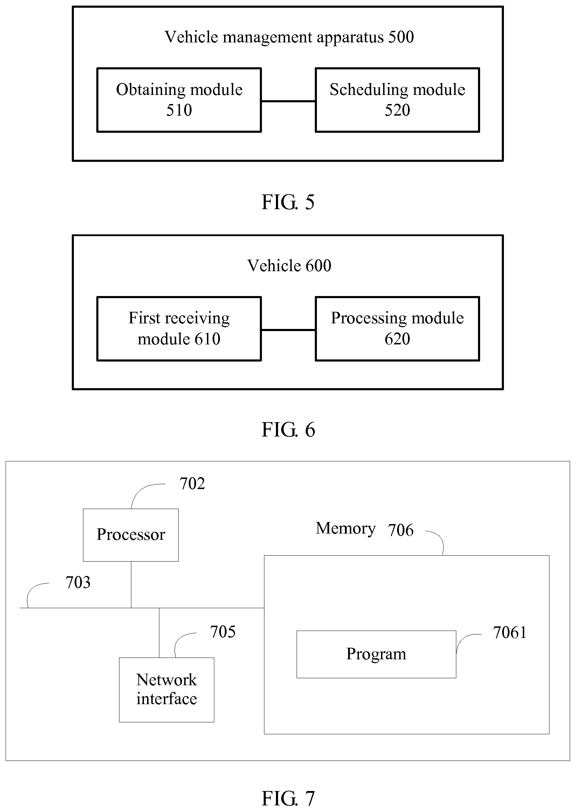

FIG. 5 shows a schematic block diagram of a vehicle management apparatus 500 according to an embodiment of the present invention. The apparatus may be a management center or a control center of an ITS, another device that has a function of centrally controlling an ITS system, or the like. As shown in FIG. 5, the apparatus 500 includes:
an obtaining module 510, configured to obtain mode identifier information of a vehicle, where the mode identifier information indicates whether the vehicle is in a sharing mode or an exclusive mode, the sharing mode indicates that different users are allowed to share the vehicle, and the exclusive mode indicates that only a single user is allowed to use the vehicle; and
a scheduling module 520, configured to schedule the vehicle according to the mode identifier information obtained by the obtaining module 510.

According to the vehicle management apparatus in this embodiment of the present invention, a management center schedules the vehicle according to the mode identifier information of the vehicle, so as to dynamically adjust a vehicle resource.

In this embodiment of the present invention, the obtained mode identifier information may be sent by the vehicle or set by the management center for the vehicle.

Optionally, the apparatus 500 may further include:
a sending module, configured to send the mode identifier information to the vehicle, so that the vehicle uses the sharing mode or the exclusive mode.

Optionally, in another embodiment, the obtaining module 510 is specifically configured to:
receive the mode identifier information from the vehicle.

Optionally, the apparatus further includes:
a query module, configured to send a query message to the vehicle, where the query message is used to obtain the mode identifier information.

Optionally, in another embodiment, the obtaining module 510 is specifically configured to:
generate the mode identifier information according to vehicle usage information of an intelligent transportation system ITS.

Optionally, the apparatus further includes:
a sending module, configured to set the mode identifier information for the vehicle.

Optionally, the scheduling module 520 is specifically configured to:
when the mode identifier information indicates that the vehicle is in the sharing mode, determine that the vehicle resource set corresponding to the vehicle is a shared vehicle resource set.

Optionally, the scheduling module 520 is specifically configured to:
when the mode identifier information indicates that the vehicle is in the sharing mode, obtain a driving route plan of a usage to-be-allowed user, where the usage to-be-allowed user is another user other than a usage allowed user, and the usage allowed user is a user that has been allowed to use the vehicle; and
when a driving route plan of the usage allowed user matches the driving route plan of the usage to-be-allowed user, send a first vehicle usage notification message to the vehicle, where the first vehicle usage notification message includes identity information of the usage to-be-allowed user and the driving route plan of the usage to-be-allowed user, so as to instruct the vehicle to execute a command that is input by the user and that is corresponding to the driving route plan of the user.

In some possible implementations, optionally, the obtaining module 510 is specifically configured to:
receive a first vehicle usage request message of the usage to-be-allowed user, where the first vehicle usage request message includes the identity information of the usage to-be-allowed user and/or the driving route plan of the usage to-be-allowed user.

Optionally, the scheduling module 520 is further specifically configured to:
obtain the driving route plan of the usage allowed user;
send a second vehicle usage notification message to the vehicle, where the second vehicle usage notification message includes identity information of the usage allowed user and the driving route plan of the usage allowed user.

In some possible implementations, optionally, the obtaining module 510 is specifically configured to:
receive a second vehicle usage request message of the usage allowed user, where the second vehicle usage request message includes the identity information of the usage allowed user and/or the driving route plan of the usage allowed user.

Optionally, the scheduling module 520 is specifically configured to:
when the mode identifier information indicates that the vehicle is in the exclusive mode, obtain a driving route plan of the single user; and
send a third vehicle usage notification message to the vehicle, where the third vehicle usage notification message includes identity information of the single user and the driving route plan of the single user.

The vehicle management apparatus 500 according to this embodiment of the present invention may execute the vehicle management method 200 according to an embodiment of the present invention, and the foregoing and other operations and/or functions of the modules in the apparatus 500 are respectively used to implement corresponding procedures of the methods described above. For brevity, details are not described herein again.

Therefore, according to the vehicle management apparatus in this embodiment of the present invention, the management center schedules the vehicle according to the mode identifier information of the vehicle, so as to dynamically adjust the vehicle resource.

The foregoing describes the vehicle management apparatus according to this embodiment of the present invention from a management center side with reference to FIG. 5, and the following describes the vehicle from a vehicle side with reference to FIG. 6.

FIG. 6 shows a schematic block diagram of a vehicle 600 according to an embodiment of the present invention. As shown in FIG. 6, the vehicle 600 includes:
a receiving module 610, configured to receive a vehicle scheduling message sent by a management device according to mode identifier information of a vehicle, where the mode identifier information indicates whether the vehicle is in a sharing mode or an exclusive mode, the sharing mode indicates that different users are allowed to share the vehicle, and the exclusive mode indicates that only a single user is allowed to use the vehicle; and
a processing module 620, configured to perform usage control according to the vehicle scheduling message received by the first receiving module 610.

In this embodiment of the present invention, the vehicle receives the vehicle scheduling message sent by the management device according to the mode identifier information, and performs the usage control according to the vehicle scheduling message, so that the management device can dynamically adjust a vehicle resource.

Optionally, in an embodiment, the vehicle further includes:
an obtaining module, configured to obtain the mode identifier information of the vehicle, and use the sharing mode or the exclusive mode according to the mode identifier information; and
a sending module, configured to send the mode identifier information to the management device, so that the management device generates the vehicle scheduling message according to the mode identifier information.

Optionally, the first receiving module 610 is further configured to:
when the mode identifier information of the vehicle indicates that the vehicle is in the sharing mode, receive a first vehicle usage notification message sent by the management device, where the first vehicle usage notification message includes identity information of a usage to-be-allowed user and a driving route plan of a usage allowed user, the usage to-be-allowed user is another user other than a usage allowed user, the usage allowed user is a user that has been allowed to use the vehicle, and a driving route plan of the usage allowed user matches the driving route plan of the usage to-be-allowed user.

Optionally, the first receiving module 610 is further configured to:
receive a second vehicle usage notification message sent by the management device, where the second vehicle usage notification message includes identity information of the usage allowed user and the driving route plan of the usage allowed user.

Optionally, the first receiving module 610 is further configured to:
when the mode identifier information of the vehicle indicates that the vehicle is in the exclusive mode, receive a third vehicle usage notification message sent by the management device, where the third vehicle usage notification message includes identity information of the single user and a driving route plan of the single user.

Optionally, the first receiving module 610 is further configured to:
when the vehicle is in the exclusive mode, receive a fourth vehicle usage notification message sent by the management device, where the fourth vehicle usage notification message includes identity information of a non-single user and a driving route plan of the non-single user, and the non-single user is another user other than the single user; and
send a rejection message to the management device, where the rejection message is used to indicate rejection of executing the fourth vehicle usage notification message.

Optionally, in an embodiment, the vehicle further includes:
a second receiving module, configured to receive new mode identifier information from the management device; and
an updating module, configured to update the current mode identifier information by using the new state identifier message received by the second receiving module.

Optionally, the obtaining module 610 is specifically configured to:
receive the mode identifier information set by a user, where the user includes a vehicle owner, a user that has management permission of the vehicle, or a user that is allowed to change a status of the vehicle.

Optionally, the obtaining module 610 is specifically configured to:
receive the mode identifier information sent by the management device, where the mode identifier information is set by the management device according to a transportation service requirement.

Optionally, the vehicle 600 further includes:
a sending module, configured to provide the mode identifier information for the management device.

Optionally, the vehicle 600 further includes:
a second receiving module, configured to receive a query message sent by the management device, where the query message is used to obtain the mode identifier information.

Therefore, the vehicle according to this embodiment of the present invention receives the vehicle scheduling message sent by the management device according to the mode identifier information, and performs the usage control according to the vehicle scheduling message, so that the management device can dynamically adjust the vehicle resource.

The vehicle 600 according to this embodiment of the present invention may execute the vehicle management method 300 according to an embodiment of the present invention, and the foregoing and other operations and/or functions of the modules in the vehicle-mounted device 600 are respectively used to implement corresponding procedures of the methods described above. For brevity, details are not described herein again.

FIG. 7 shows a structure of a vehicle management apparatus according to another embodiment of the present invention. The apparatus includes at least one processor 702 (for example, a CPU), at least one network interface 705 or another communications interface, a memory 706, and at least one communications bus 703 that is configured to implement connection and communication between these apparatuses. The processor 702 is configured to execute an executable module stored in the memory 706, such as a computer program. The memory 706 may include a high-speed random access memory (RAM: Random Access Memory), and may further include a non-volatile memory (non-volatile memory), such as at least one disk memory. Communication with and connection to at least one other network element is implemented by using the at least one network interface 705 (which may be in a wired manner or in a wireless manner).

In some implementations, the memory 706 stores a program 7061, and the processor 702 executes the program 7061 to perform the vehicle management method on the management center side according to the foregoing embodiment of the present invention.

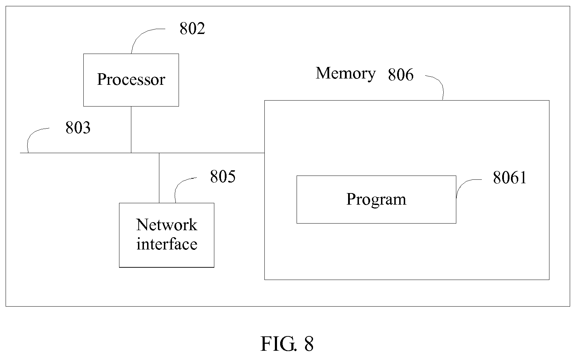

FIG. 8 shows a structure of a vehicle apparatus according to another embodiment of the present invention. The apparatus includes at least one processor 802 (for example, a CPU), at least one network interface 805 or another communications interface, a memory 806, and at least one communications bus 803 that is configured to implement connection and communication between these apparatuses. The processor 802 is configured to execute an executable module stored in the memory 806, such as a computer program. The memory 806 may include a high-speed random access memory (RAM: Random Access Memory), and may further include a non-volatile memory (non-volatile memory), such as at least one disk memory. Communication with and connection to at least one other network element is implemented by using the at least one network interface 805 (which may be in a wired manner or in a wireless manner).

In some implementations, the memory 806 stores a program 8061, and the processor 802 executes the program 8061 to perform the vehicle management method on the vehicle side according to the foregoing embodiment of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be constructed as any limitation on the implementation processes of the embodiments of the present invention.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A vehicle management method, comprising:
obtaining mode identifier information of a vehicle, wherein the mode identifier information indicates whether the vehicle is in a sharing mode or an exclusive mode, the sharing mode indicates that different users are allowed to share the vehicle, and the exclusive mode indicates that only a single user is allowed to use the vehicle; and
scheduling the vehicle according to the mode identifier information.

2. The method according to claim 1, wherein after the obtaining mode identifier information of a vehicle, the method further comprises:
sending the mode identifier information to the vehicle, so that the vehicle uses the sharing mode or the exclusive mode.

3. The method according to claim 1 or 2, wherein the scheduling the vehicle according to the mode identifier information comprises:
when the mode identifier information indicates that the vehicle is in the sharing mode, obtaining a driving route plan of a usage to-be-allowed user, wherein the usage to-be-allowed user is another user other than a usage allowed user, and the usage allowed user is a user that has been allowed to use the vehicle; and
when a driving route plan of the usage allowed user matches the driving route plan of the usage to-be-allowed user, sending a first vehicle usage notification message to the vehicle, wherein the first vehicle usage notification message comprises identity information of the usage to-be-allowed user and the driving route plan of the usage to-be-allowed user.

4. The method according to claim 3, wherein before the obtaining a driving route plan of a usage to-be-allowed user, the method further comprises:
obtaining the driving route plan of the usage allowed user; and
sending a second vehicle usage notification message to the vehicle, wherein the second vehicle usage notification message comprises identity information of the usage allowed user and the driving route plan of the usage allowed user.

5. The method according to claim 1 or 2, wherein the scheduling the vehicle according to the mode identifier information comprises:
when the mode identifier information indicates that the vehicle is in the exclusive mode, obtaining a driving route plan of the single user; and
sending a third vehicle usage notification message to the vehicle, wherein the third vehicle usage notification message comprises identity information of the single user and the driving route plan of the single user.

6. The method according to any one of claims 1 to 5, wherein the obtaining mode identifier information of a vehicle comprises:
receiving the mode identifier information from the vehicle.

7. The method according to claim 6, wherein before the receiving the mode identifier information from the vehicle, the method further comprises:
sending a query message to the vehicle, wherein the query message is used to obtain the mode identifier information.

8. A vehicle management method, comprising:
receiving a vehicle scheduling message sent by a management device according to mode identifier information of a vehicle, wherein the mode identifier information indicates whether the vehicle is in a sharing mode or an exclusive mode, the sharing mode indicates that different users are allowed to share the vehicle, and the exclusive mode indicates that only a single user is allowed to use the vehicle; and
performing usage control according to the vehicle scheduling message.

9. The method according to claim 8, wherein the method further comprises:
obtaining the mode identifier information of the vehicle, and using the sharing mode or the exclusive mode according to the mode identifier information.

10. The method according to claim 8 or 9, wherein the receiving a vehicle scheduling message sent by a management device according to mode identifier information of a vehicle comprises:
when the mode identifier information of the vehicle indicates that the vehicle is in the sharing mode, receiving a first vehicle usage notification message sent by the management device, wherein the first vehicle usage notification message comprises identity information of a usage to-be-allowed user and a driving route plan of the usage to-be-allowed user, the usage to-be-allowed user is another user other than a usage allowed user, the usage allowed user is a user that has been allowed to use the vehicle, and a driving route plan of the usage allowed user matches the driving route plan of the usage to-be-allowed user.

11. The method according to claim 10, wherein before the receiving a first vehicle usage notification message sent by the management device, the method further comprises:
receiving a second vehicle usage notification message sent by the management device, wherein the second vehicle usage notification message comprises identity information of the usage allowed user and the driving route plan of the usage allowed user.

12. The method according to claim 8 or 9, wherein the receiving a vehicle scheduling message sent by a management device according to mode identifier information of a vehicle comprises:
when the mode identifier information of the vehicle indicates that the vehicle is in the exclusive mode, receiving a third vehicle usage notification message sent by the management device, wherein the third vehicle usage notification message comprises identity information of the single user and a driving route plan of the single user.

13. The method according to any one of claims 8 to 12, wherein the method further comprises:
sending the mode identifier information to the management device.

14. The method according to claim 13, wherein before the sending the mode identifier information to the management device, the method further comprises:
receiving a query message sent by the management device, wherein the query message is used by the management device to obtain the mode identifier information.

15. A vehicle management apparatus, comprising:
an obtaining module, configured to obtain mode identifier information of a vehicle, wherein the mode identifier information indicates whether the vehicle is in a sharing mode or an exclusive mode, the sharing mode indicates that different users are allowed to share the vehicle, and the exclusive mode indicates that only a single user is allowed to use the vehicle; and
a scheduling module, configured to schedule the vehicle according to the mode identifier information obtained by the obtaining module.

16. The apparatus according to claim 15, wherein the apparatus further comprises:
a sending module, configured to send the mode identifier information to the vehicle, so that the vehicle uses the sharing mode or the exclusive mode.

17. The apparatus according to claim 15 or 16, wherein the scheduling module is specifically configured to:
when the mode identifier information indicates that the vehicle is in the sharing mode, obtain a driving route plan of a usage to-be-allowed user, wherein the usage to-be-allowed user is another user other than a usage allowed user, and the usage allowed user is a user that has been allowed to use the vehicle; and
when a driving route plan of the usage allowed user matches the driving route plan of the usage to-be-allowed user, send a first vehicle usage notification message to the vehicle, wherein the first vehicle usage notification message comprises identity information of the usage to-be-allowed user and the driving route plan of the usage to-be-allowed user.

18. The apparatus according to claim 17, wherein the scheduling module is further specifically configured to:
obtain the driving route plan of the usage allowed user; and
send a second vehicle usage notification message to the vehicle, wherein the second vehicle usage notification message comprises identity information of the usage allowed user and the driving route plan of the usage allowed user.

19. The apparatus according to claim 15 or 16, wherein the scheduling module is specifically configured to:
when the mode identifier information indicates that the vehicle is in the exclusive mode, obtain a driving route plan of the single user; and
send a third vehicle usage notification message to the vehicle, wherein the third vehicle usage notification message comprises identity information of the single user and the driving route plan of the single user.

20. The apparatus according to any one of claims 15 to 19, wherein the obtaining module is specifically configured to:
receive the mode identifier information from the vehicle.

21. The apparatus according to claim 20, wherein the apparatus further comprises:
a query module, configured to send a query message to the vehicle, wherein the query message is used to obtain the mode identifier information.

22. A vehicle, comprising:
a first receiving module, configured to receive a vehicle scheduling message sent by a management device according to mode identifier information of a vehicle, wherein the mode identifier information indicates whether the vehicle is in a sharing mode or an exclusive mode, the sharing mode indicates that different users are allowed to share the vehicle, and the exclusive mode indicates that only a single user is allowed to use the vehicle; and
a processing module, configured to perform usage control according to the vehicle scheduling message received by the first receiving module.

23. The vehicle according to claim 22, wherein the vehicle further comprises:
an obtaining module, configured to obtain the mode identifier information of the vehicle, and use the sharing mode or the exclusive mode according to the mode identifier information.

24. The vehicle according to claim 22 or 23, wherein the first receiving module is further configured to:
when the mode identifier information of the vehicle indicates that the vehicle is in the sharing mode, receive a first vehicle usage notification message sent by the management device, wherein the first vehicle usage notification message comprises identity information of a usage to-be-allowed user and a driving route plan of a usage allowed user, the usage to-be-allowed user is another user other than a usage allowed user, the usage allowed user is a user that has been allowed to use the vehicle, and a driving route plan of the usage allowed user matches the driving route plan of the usage to-be-allowed user.

25. The vehicle according to claim 24, wherein the first receiving module is further configured to:
receive a second vehicle usage notification message sent by the management device, wherein the second vehicle usage notification message comprises identity information of the usage allowed user and the driving route plan of the usage allowed user.

26. The vehicle according to claim 22 or 23, wherein the first receiving module is configured to:
when the mode identifier information of the vehicle indicates that the vehicle is in the exclusive mode, receive a third vehicle usage notification message sent by the management device, wherein the third vehicle usage notification message comprises identity information of the single user and a driving route plan of the single user.

27. The vehicle according to any one of claims 22 to 26, wherein the vehicle further comprises:
a sending module, configured to send the mode identifier information to the management device.

28. The vehicle according to claim 27, wherein the vehicle further comprises:
a second receiving module, configured to receive a query message sent by the management device, wherein the query message is used by the management device to obtain the mode identifier information.
